# EUROPÄISCHE PATENTANMELDUNG

(11) **EP 1 102 147 A2**
(43) Veröffentlichungstag der Anmeldung: **23.05.2001**
(21) Anmeldenummer: 00203599.6
(22) Anmeldetag: 16.10.2000
(51) Int. Cl.: G05D 23/02

(54) **Ventil, insbesondere Thermostatventil für Heizungsanlagen**

(30) Priorität: 17.11.1999 DE 19955261
(71) Anmelder: Danfoss A/S, 6430 Nordborg (DK)
(72) Erfinder: Wiwe, Joergen Seindal, 8355 Solbjerg (DK); Garm, Fester, 8600 Silkeborg (DK); Hoelck, Poul, 8330 Beder (DK)

(57) **Zusammenfassung**

Ein Ventil, insbesondere Thermostatventil für Heizungsanlagen, weist ein Gehäuse (200), einen Ventilsitz (210) und ein Verschlußstück (211) auf, das mittels eines durch eine Dichtvorrichtung (207) nach außen geführten Stifts (208) zu betätigen ist. Es gibt eine Anschlußvorrichtung (218) zum Befestigen eines Betätigungsaufsatzes, die eine Anlagefläche (221) in einem ersten Abstand (A) vom freien Ende des Stifts (208) und eine zugehörige erste Spannfläche (221) aufweist. Zum Befestigen mindestens eines zweiten Typs eines Betätigungsaufsatzes ist ein Anschlußelement (206), das zumindest den Ventilsitz (210) und die Dichtvorrichtung (207) trägt, in Richtung der Stiftachse aus einer ersten Stellung in eine zweite Stellung verstellbar. Ein zur Stiftachse koaxialer Anschlußstutzen (204) weist außen eine Ringdichtung (205) auf. Zwischen Ventilsitz (210) und Ringdichtung (205) ist eine Abstands-Ausgleichsvorrichtung vorgesehen. Auf diese Weise gelingt es, durch die Einführung axial verschiebbarer Teile mindestens zwei unterschiedliche Formen zu schaffen, die wahlweise für das Anbringen eines ersten oder zweiten Typs eines Betätigungsaufsatzes geeignet sind.

## Beschreibung

Die Erfindung bezieht sich auf ein Ventil, insbesondere Thermostatventil für Heizungsanlagen, mit einem Gehäuse, einem Ventilsitz, einem Verschlußstück, das mittels eines durch eine Dichtvorrichtung nach außen geführten Stifts zu betätigen ist, und mit einer Anschlußvorrichtung zum Befestigen eines Betätigungsaufsatzes, die eine Anlagefläche in einem ersten Abstand vom freien Ende des Stifts und eine zugehörige erste Spannfläche aufweist.

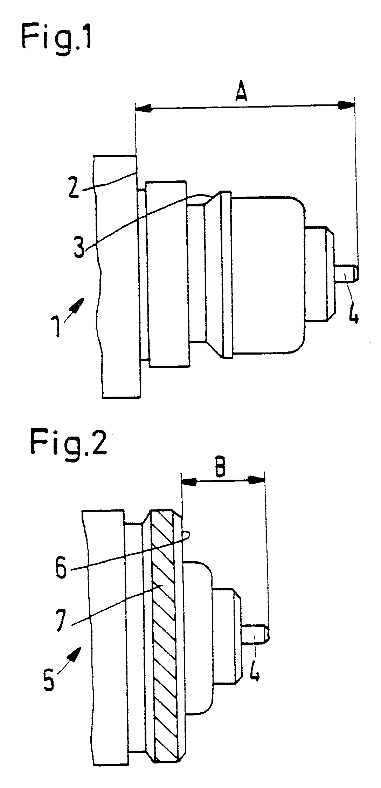

Damit am Ventil ein Betätigungsaufsatz angebracht werden kann, ist am Ventilgehäuses eine Anschlußvorrichtung erforderlich, die dem Typ des Betätigungsaufsatzes entspricht. Die meisten auf dem Markt befindlichen Ventile haben Anschlußvorrichtungen, wie sie in den Fig. 1 und 2 veranschaulicht sind. Bei der eine erste Form aufweisende Anschlußvorrichtung 1 ist eine Anlagefläche 2 vorgesehen, gegen die der Sockel des Betätigungsaufsatzes angepreßt wird, indem eine radiale Kraft an einer konusförmigen Spannfläche 3 in die Axialrichtung umgelenkt wird. Der Abstand A zwischen der Anlagefläche 2 und dem freien Ende des der Betätigung des Verschlußstücks dienenden Stiftes 4 beträgt etwa 30 mm. Ein Beispiel hierfür ist in der DE 32 36 372 C2 veranschaulicht. Bei der eine zweite Form aufweisenden Anschlußvorrichtung 5 ist die Anlagefläche 6 an der Stirnseite einer als Gewinde ausgeführten Spannfläche 7 vorgesehen. Durch Aufschrauben einer mit einem Innenflansch versehenen Überwurfmutter wird der Sockel des Betätigungsaufsatzes gegen die Anlagefläche 6 gedrückt. Die Spannfläche 7 besitzt ein M30 x 1,5 Gewinde. Der Abstand B zwischen der Anlagefläche 6 und dem freien Ende des Ventilstiftes 4 beträgt etwa 10 mm. Ein Beispiel hierfür ist in DE 43 44 773 A1 veranschaulicht. Weitere Anschlußvorrichtungen unterscheiden sich von der Anschlußvorrichtung 5 dadurch, daß der Abstand B etwas größer ist, beispielsweise etwa 20 mm beträgt.

Es ist ferner bekannt (DE 94 11 056 U1), ein und dasselbe Ventil zum Anschluß von zwei oder mehr Typen eines Betätigungsaufsatzes geeignet zu machen, indem ein Adapter, also ein Zusatzbauteil, zwischen Ventil und Betätigungsaufsatz geschaltet wird. Der Heizungsbauer kann daher bei Reparaturarbeiten mit wenigen Ersatzteilen, die er mitführen muß, auskommen. Er kann auch Ventile und Betätigungsaufsätze unterschiedlicher Firmen miteinander kombinieren. Allerdings hat es sich gezeigt, daß die bei einer bestimmten Nutzungsart nicht benötigten Zusatzbauteile oder Adapter zu dem Zeitpunkt, an dem sie benötigt werden, häufig nicht zur Verfügung stehen, sei es daß sie verlorengegangen oder aufgebraucht sind.

Der Erfindung liegt demgegenüber die Aufgabe zugrunde, ein Ventil der eingangs beschriebenen Art anzugeben, das alle Mittel aufweist, um wahlweise einen von mindestens zwei unterschiedlichen Betätigungsaufsatz-Typen anzubringen.

Diese Aufgabe wird erfindungsgemäß dadurch gelöst, daß zum Befestigen mindestens eines zweiten Typs eines Betätigungsaufsatzes ein zumindest den Ventilsitz und die Dichtvorrichtung tragendes Anschlußelement in Richtung der Stiftachse aus einer ersten Stellung in eine zweite Stellung verstellbar ist, daß ein zur Stiftachse koaxialer Anschlußstutzen außen eine Ringdichtung aufweist und daß eine Abstands-Ausgleichsvorrichtung zwischen Ventilsitz und Ringdichtung vorgesehen ist.

Durch die Einführung axial verschiebbarer Teile gelingt es, mindestens zwei unterschiedliche Formen zu schaffen, die wahlweise für das Anbringen eines ersten oder zweiten Typs eines Betätigungsaufsatzes geeignet sind. Außerdem kann die Ringdichtung des Anschlußstutzens, die bei einem Einbauventil zur Abdichtung gegenüber einem Heizkörper dient, ihre Lage unabhängig von der Stellung des Anschlußelements beibehalten. Es bedarf daher keiner zusätzlichen Anpassung des Heizkörpers an das Ventil.

Günstig ist es, daß der Anschlußstutzen fest mit dem Gehäuse verbunden ist und daß zur Bildung der Abstands-Ausgleichsvorrichtung der Ventilsitz teleskopartig und abgedichtet im Anschlußstutzen verschiebbar ist. Durch eine einfache Teleskopbewegung wird der Abstand ausgeglichen.

Eine ebenfalls bevorzugte Alternative besteht darin, daß zur Bildung der Abstands-Ausgleichsvorrichtung der Ventilsitz über ein Rohr mit dehnbarer Wand, wie Wellrohr, mit dem Anschlußstutzen verbunden ist.

Empfehlenswert ist es, daß das Anschlußelement durch ein ebenfalls in zwei Stellungen in Richtung der Stiftachse verstellbares Zusatzelement ergänzt ist, das wenigstens eine Spann- und/oder Anlagefläche trägt. Durch die Verwendung von Anschlußelement und Zusatzelement lassen sich auch große Unterschiede im Abstand zwischen Anlagefläche und freiem Ende des Stiftes berücksichtigen.

Bei einer bevorzugten Ausführungsform ist dafür gesorgt, daß das Anschlußelement eine Konusfläche als erste Spannfläche aufweist und daß als Zusatzelement ein auf dem Gehäuse längs einer Gewindebahn verschraubbarer Ring vorgesehen ist, der mit seinem Außengewinde die zweite Spannfläche und mit seiner Stirnfläche eine in beiden Stellungen wirksame Anlagefläche bildet.

Einen besonders kleinen Abstand zwischen Anlagefläche und freiem Ende des Stiftes erhält man dadurch, daß die Konusfläche aus einer ersten Stellung, in der sie frei liegt, in eine zweite Stellung, in der sie von dem Ring überdeckt ist, verstellbar ist.

Bei einer ebenfalls empfehlenswerten Alternative ist dafür gesorgt, daß das Zusatzelement eine Konusfläche als erste Spannfläche aufweist und das Gehäuse einen Ring trägt, der mit einem Außengewinde die zweite Spannfläche und mit seiner Stirnfläche eine in beiden Stellungen wirksame Anlagefläche bildet.

Eine einfache Betätigung wird dadurch erreicht, daß das Anschlußelement Mitnehmer zum Mitnehmen des Zusatzelements über einen vorgegebenen Weg aufweist.

Eine vorteilhafte Ausbildung besteht darin, daß das Anschlußelement durch den im Anschlußstutzen herrschenden Zulaufdruck in seine axial äußere Stellung schiebbar ist. Das Ventil bietet daher nach seinem Einbau in die Heizungsanlage eine Form dar, die für einen ersten Typ eines Betätigungsaufsatzes geeignet ist. Durch Einwärtsschieben des Anschlußelements ergibt sich die Form, die zur Befestigung eines zweiten Typs eines Betätigungsaufsatzes geeignet ist.

Hierbei empfiehlt es sich, daß das Anschlußelement in seiner axial inneren Stellung mit dem Gehäuse verrastbar ist. Auf diese Weise kann die zweite Stellung des Anschlußelements gesichert werden.

In weiterer Ausgestaltung ist dafür gesorgt, daß der Stift mittels eines Betätigungsorgans drehbar in der Dichtvorrichtung angeordnet und über eine Kupplung mit einer Buchse für die Kv-Wert-Voreinstellung verbunden ist. Durch die Drehung der Buchse wird der Drosselwiderstand des Ventils geändert.

Dies kann vorzugsweise dadurch geschehen, daß die Buchse über ein Gewinde mit dem Anschlußelement verbunden ist und sich daher bei Drehung axial verschiebt. Durch die Axialverschiebung kann beispielsweise die Weite eines Ringspalts geändert werden.

Die Erfindung wird im folgenden anhand bevorzugter Ausführungsbeispiele in Verbindung mit der Zeichnung näher beschrieben. Hierin zeigen:
- Fig. 1: eine schematische Darstellung einer Anschlußvorrichtung für einen ersten Typ eines Betätigungsaufsatzes nach dem Stand der Technik,
- Fig. 2: eine schematische Darstellung einer Anschlußvorrichtung für einen zweiten Typ eines Betätigungsaufsatzes nach dem Stand der Technik,
- Fig. 3: einen Längsschnitt durch ein Ventil gemäß der Erfindung mit einer Anschlußvorrichtung entsprechend Fig. 1,
- Fig. 4: einen Längsschnitt durch das Ventil gemäß Fig. 3 mit einer Anschlußvorrichtung entsprechend Fig. 2,
- Fig. 5: einen Längsschnitt durch eine andere Ausführungsform eines erfindungsgemäßen Ventils mit einer Anschlußvorrichtung entsprechend Fig. 1 und
- Fig. 6: einen Längsschnitt durch das Ventil gemäß Fig. 5 mit einer Anschlußvorrichtung entsprechend Fig. 2.

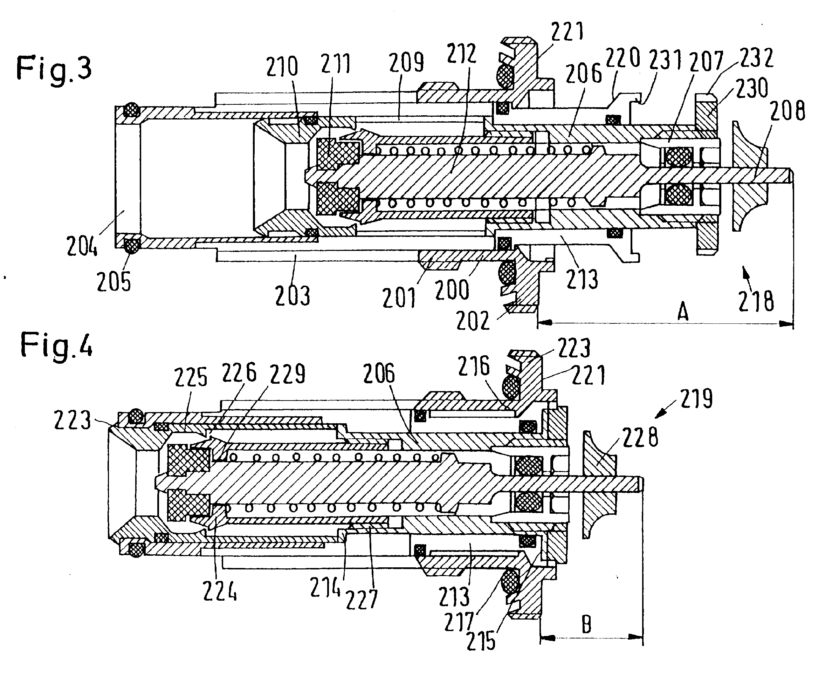

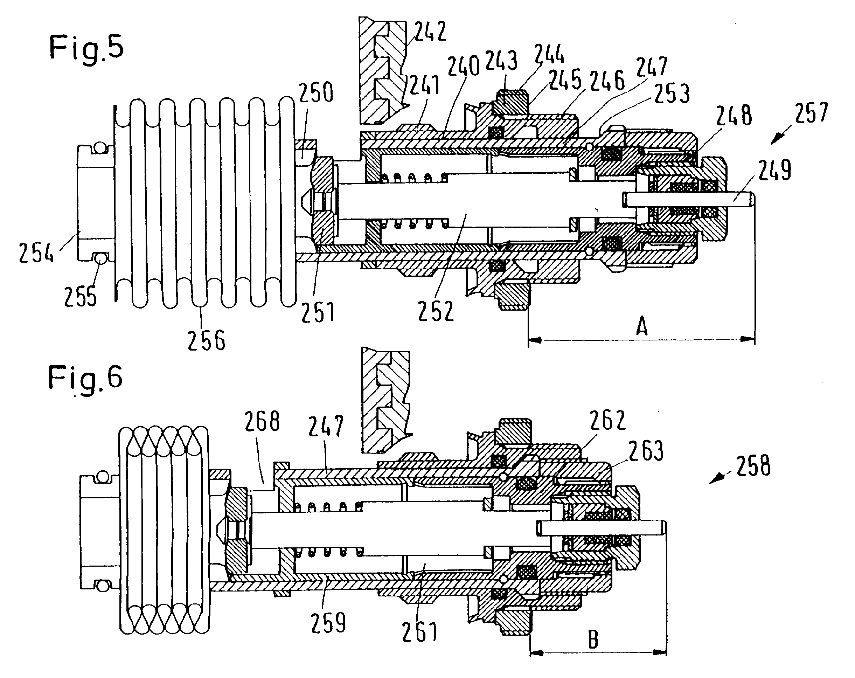

Das Ventil der Fig. 3 und 4 besitzt ein Gehäuse 200, das mit einem Gewinde 201 in einen Gewindestutzen eines nicht veranschaulichten Heizkörpers eingeschraubt werden kann, bis ein mit dem Gehäuse 200 verbundener Ring 202 an der Stirnseite dieses Gewindestutzens zur Anlage kommt. Das Gehäuse 200 trägt über Längsstege 203 einen Anschlußstutzen 204, der außen eine Ringdichtung 205 aufweist, die bei eingebautem Ventil in eine Bohrung des nicht veranschaulichten Heizkörpers greift und dort eine definierte Lage hat.

Ein Anschlußelement 206 trägt eine Dichtvorrichtung 207 für einen nach außen geführten Stift 208 und über Längsstege 209 einen Ventilsitz 210. Dieser arbeitet mit einem Verschlußstück 211 zusammen, das über eine Ventilstange 212 mit dem Stift 208 verbunden ist. Ein Teil des Anschlußelements 206 ist von einem Zusatzelement 213 umgeben. Mitnehmer 214 und 215 am Anschlußelement sorgen dafür, daß das Zusatzelement 213 bei einer Bewegung des Anschlußelements 206 streckenweise mitgenommen wird. Anschläge 216 und 217 am Gehäuse 200 sorgen für eine Bewegungsbegrenzung. Das Ventil kann daher wahlweise in die Stellung der Fig. 3, in der sich eine Anschlußvorrichtung 218 zur Befestigung eines ersten Typs eines Betätigungsaufsatzes ergibt, oder in die Stellung der Fig. 4, in der sich eine Anschlußvorrichtung 219 zur Befestigung eines zweiten Typs eines Betätigungsaufsatzes ergibt, gebracht werden.

Bei der Anschlußvorrichtung 218 (Fig. 3) wirkt beim Anbringen eines Betätigungsaufsatzes eine konusförmige Spannfläche 220 am Zusatzelement 213 mit einer Anlagefläche 221 am Ring 202 zusammen, so daß sich der Abstand A von beispielsweise 30 mm zwischen der Anlagefläche 221 und dem freien Ende des Stiftes 208 ergibt. Bei der Anschlußvorrichtung 219 (Fig. 4) wirkt eine als Außengewinde ausgebildete Spannfläche 222 mit der Anlagefläche 221 zusammen, so daß sich ein Abstand B von beispielsweise 10 mm zwischen dieser Anlagefläche und dem freien Ende des Stiftes 208 ergibt. Hierbei verschiebt sich der Ventilsitz teleskopartig im Anschlußstutzen 204, wodurch sich eine Abstands-Ausgleichsvorrichtung ergibt.

Wird das Ventil der Fig. 3 und 4 in eine Heizungsanlage eingebaut, so nehmen das Anschlußelement 206 und das Zusatzelement 213 automatisch die Form der Anschlußvorrichtung 218 (Fig. 3) ein, weil der Zulaufdruck im Anschlußstutzen 204 den Ventilsitz 210 und damit das Anschlußelement 206 in die axial äußere Stellung drückt. Soll nun aber ein Betätigungsaufsatz vom zweiten Typ angebracht werden, führt man diesen in axialer Richtung zu. Hierbei wird der Stift 208 mitgenommen und drückt das Verschlußstück 211 gegen den Ventilsitz 210. Dieser schiebt den Ventilsitz 210 und damit das Anschlußelement 206 in die in Fig. 4 veranschaulichte Stellung, wo eine Raste 223 am Ventilsitz 210 hinter die Stirnfläche des Anschlußstutzens 204 greift. Sollte die so gewonnene zweite Anschlußvorrichtung 219 versehentlich eingenommen worden sein, kann nach Ausbau des Ventils die Verrastung wieder gelöst werden.

Zur Bildung einer kᵥ-Voreinstellungs-Vorrichtung bildet eine Buchse 224 zusammen mit einem Fortsatz 225 des Ventilsitzes 210 einen Spalt 226. Die Buchse 224 ist über ein Gewinde 227 mit dem Anschlußelement 206 verbunden, so daß sich durch eine Drehung der Buchse 224 relativ zum Anschlußelement 206 eine Axialverlagerung und damit eine Änderung der Spalthöhe ergibt. Gedreht werden kann die Buchse 224 mit Hilfe eines Betätigungsorgans 228, das seine Drehbewegung über den Stift 208, die Ventilstange 212 sowie eine Drehkupplung 229, beispielsweise mit Mehrkantquerschnitt, überträgt. Da das Anschlußelement 206 unter Überwindung der Reibung der O-Ringdichtungen im Gehäuse 200 drehbar ist, kann man die Voreinstellvorrichtung so einstellen, daß die Referenzlinie eine Skaleneinstellung an einer dem Betätigungsorgan 208 benachbarten Platte 230 gut sichtbar ist.

Die Drehsicherung der Betätigungsaufsätze kann auf verschiedene Art und Weise erfolgen. In vorliegendem Ausführungsbeispiel sind Drehsicherungselemente 231 am Zusatzelement 213 für den ersten Typ von Betätigungsaufsätzen und Drehsicherungselemente 232 an der Platte 230 für einen zweiten Typ eines Betätigungsaufsatzes vorgesehen.

Das Ventil nach den Fig. 5 und 6 weist ein Gehäuse 240 auf, das mittels eines Gewindes 241 in einen nur angedeuteten Heizkörper 242 einschraubbar ist. Das Gehäuse 240 trägt ein ringförmiges Zusatzelement 243, das an der Außenseite eine als Gewinde ausgebildeten Spannfläche 244 und an der Stirnseite eine Anlagefläche 245 aufweist. Das Zusatzelement 243 ist längs einer Gewindebahn 2456 axial verstellbar, kann aber vorzugsweise auch einstückig mit dem Gehäuse 240 ausgebildet sein.

Ein Anschlußelement 247 ist abgedichtet im Gehäuse 240 geführt. Es trägt eine Dichtvorrichtung 248 für einen nach außen tretenden Stift 249 sowie einen Ventilsitz 250. Dieser wirkt mit einem Verschlußstück 251 zusammen, das über eine Ventilstange 252 mit dem Stift 249 gekuppelt ist. Am Anschlußelement 247 ist eine konusförmige Spannfläche 253 ausgebildet.

Wiederum ist ein Anschlußstutzen 254 mit einer Ringdichtung 255 vorgesehen. Der Anschlußstutzen 254 ist über ein Rohr 256 mit dehnbarer Wand, hier ein Wellrohr, mit dem Ventilsitz 250 verbunden. Dieses Rohr bildet eine Abstands-Ausgleichsvorrichtung, die es erlaubt, das Anschlußelement 247 über den gesamten Weg zwischen der Stellung der Fig. 5 und der Stellung der Fig. 6 zu verschieben, dabei aber den Abstand zwischen dem Gewinde 241 des Gehäuses 240 und der Ringdichtung 255 konstant zu halten.

Wie ein Vergleich der Fig. 5 und 6 zeigt, gibt es eine erste Stellung (Anschlußvorrichtung 257), in der die Spannfläche 253 frei liegt und eine zweite Stellung (Anschlußvorrichtung 258) in der diese Ringfläche durch den Ring 243 überdeckt ist. Dieses Ineinanderschieben ist möglich, weil das Gehäuse 240 nach innen ragende Rippen aufweist, die in entsprechende Axialnuten des Anschlußelements 200 und 247 eingreifen. Durch axiales Verstellen des Zusatzelements 243 läßt sich der Abstand zwischen Anlagefläche 245 und freiem Ende des Stiftes 249 noch weiter verkürzen. In diesem Fall dient der Ring als Zusatzelement.

Eine kᵥ-Voreinstellungs-Vorrichtung weist eine innerhalb des Anschlußelements 247 angeordnete Hülse 259 auf, die, ebenso wie das Anschlußelement 247, einen seitlichen Ausschnitt aufweist, so daß sich eine verstellbare Drosselöffnung 260 ergibt. Die Hülse 259 ist über eine Drehkupplung 261 mit einem Dreheinsatz 262 versehen, der durch ein Betätigungsorgan 263 relativ zum Anschlußelement 247 gedreht werden kann.

Auch bei dieser Konstruktion wirkt sich der Zulaufdruck derart auf das Anschlußelement aus, daß sich bei eingebautem Ventil automatisch die Stellung der Fig. 5 einstellt. Mit geringer Kraft kann dann das Anschlußelement in die in Fig. 6 gezeigte Stellung gedrängt und dort durch eine Überwurfmutter, deren Innenflansch an der Anlagefläche 245 anliegt, festgehalten werden.

## Patentansprüche

1. Ventil, insbesondere Thermostatventil für Heizungsanlagen, mit einem Gehäuse, einem Ventilsitz, einem Verschlußstück, das mittels eines durch eine Dichtvorrichtung nach außen geführten Stifts zu betätigen ist, und mit einer Anschlußvorrichtung zum Befestigen eines Betätigungsaufsatzes, die eine Anlagefläche in einem ersten Abstand vom freien Ende des Stifts und eine zugehörige erste Spannfläche aufweist, dadurch gekennzeichnet, daß zum Befestigen mindestens eines zweiten Typs eines Betätigungsaufsatzes ein zumindest den Ventilsitz (210; 250) und die Dichtvorrichtung (207; 248) tragendes Anschlußelement (206; 247) in Richtung der Stiftachse aus einer ersten Stellung in eine zweite Stellung verstellbar ist, daß ein zur Stiftachse koaxialer Anschlußstutzen (204; 254) außen eine Ringdichtung (205; 255) aufweist und daß eine Abstands-Ausgleichsvorrichtung zwischen Ventilsitz und Ringdichtung vorgesehen ist.

2. Ventil nach Anspruch 1, dadurch gekennzeichnet, daß der Anschlußstutzen (204) fest mit dem Gehäuse (200) verbunden ist und daß zur Bildung der Abstands-Ausgleichsvorrichtung der Ventilsitz (210) teleskopartig und abgedichtet im Anschlußstutzen verschiebbar ist.

3. Ventil nach Anspruch 1, dadurch gekennzeichnet, daß zur Bildung der Abstands-Ausgleichsvorrichtung der Ventilsitz (250) über ein Rohr (256) mit dehnbarer Wand, wie Wellrohr, mit dem Anschlußstutzen (254) verbunden ist.

4. Ventil nach einem der Ansprüche 1 bis 3, dadurch gekennzeichnet, daß das Anschlußelement (206; 247) durch ein ebenfalls in zwei Stellungen in Richtung der Stiftachse verstellbares Zusatzelement (213; 243) ergänzt ist, das wenigstens eine Spann- und/oder Anlagefläche (220; 244, 245) trägt.

5. Ventil nach Anspruch 4, dadurch gekennzeichnet, daß das Anschlußelement (247) eine Konusfläche als erste Spannfläche (253) aufweist und daß als Zusatzelement (243) ein auf dem Gehäuse (240) längs einer Gewindebahn (246) verschraubbarer Ring vorgesehen ist, der mit seinem Außengewinde die zweite Spannfläche (244) und mit seiner Stirnfläche eine in beiden Stellungen wirksame Anlagefläche (245) bildet.

6. Ventil nach Anspruch 5, dadurch gekennzeichnet, daß die Konusfläche aus einer ersten Stellung, in der sie frei liegt, in eine zweite Stellung, in der sie von dem Ring überdeckt ist, verstellbar ist.

7. Ventil nach Anspruch 4, dadurch gekennzeichnet, daß das Zusatzelement (213) eine Konusfläche als erste Spannfläche (206) aufweist und das Gehäuse (200) einen Ring (221) trägt, der mit einem Außengewinde die zweite Spannfläche (222) und mit seiner Stirnfläche eine in beiden Stellungen wirksame Anlagefläche (221) bildet.

8. Ventil nach einem der Ansprüche 1 bis 7, dadurch gekennzeichnet, daß das Anschlußelement (206) Mitnehmer (214; 215) zum Mitnehmen des Zusatzelements (213) über einen vorgegebenen Weg aufweist.

9. Ventil nach einem der Ansprüche 1 bis 8, dadurch gekennzeichnet, daß das Anschlußelement (206; 247) durch den im Anschlußstutzen herrschenden Zulaufdruck in seine axial äußere Stellung schiebbar ist.

10. Ventil nach Anspruch 9, dadurch gekennzeichnet, daß das Anschlußelement (206) in seiner axial inneren Stellung mit dem Gehäuse (200) verrastbar ist.

11. Ventil nach einem der Ansprüche 1 bis 10, dadurch gekennzeichnet, daß der Stift (208) mittels eines Betätigungsorgans (228) drehbar in der Dichtvorrichtung (207) angeordnet und über eine Kupplung (229) mit einer Buchse (224) für die kᵥ-Wert-Voreinstellung verbunden ist.

12. Ventil nach Anspruch 11, dadurch gekennzeichnet, daß die Buchse (224) über ein Gewinde (227) mit dem Anschlußelement (206) verbunden ist und sich daher bei Drehung axial verschiebt.
